# EUROPEAN PATENT SPECIFICATION

(11) **EP 1 286 917 B1**
(45) Date of publication and mention of the grant of the patent: **09.03.2005**
(21) Application number: 01926300.3
(22) Date of filing: 27.04.2001
(51) Int. Cl.: C01D 15/04

(54) **RECOVERY OF LITHIUM CARBONATE FROM CONTAMINATED LITHIUM BROMIDE**
RÜCKGEWINNUNG VON LITHIUMKARBONAT AUS KONTAMINIERTEM LITHIUMBROMID
RECUPERATION DE CARBONATE DE LITHIUM A PARTIR DE BROMURE DE LITHIUM CONTAMINE

(30) Priority: 03.05.2000 SE 0001607
(43) Date of publication of application: 05.03.2003
(73) Proprietor: Olsson, Bozena Nenna, 246 21 Löddeköpinge (SE)
(72) Inventor: Olsson, Bozena Nenna, 246 21 Löddeköpinge (SE)
(74) Representative: Gulliksson, Jonas
(86) International application number: PCT/SE2001/000913
(87) International publication number: WO 2001/083372

(56) References cited:
- DATABASE WPI Week 197813, Derwent Publications Ltd., London, GB; AN 1978-24408A, XP002957072 & JP 53 017 590 A (HITACHI LTD) 17 February 1978
- DATABASE WPI Week 199824, Derwent Publications Ltd., London, GB; AN 1998-264504, XP002957073 & JP 9 236 358 A (MITSUBISHI RAYON CO LTD) 09 September 1997
- GUNNAR HAGG: 'Allman och oorganisk kemi' ATTONDE UPPLAGAN, ALMQVIST & WIKSELL page 565, 337

## Description

### FIELD OF INVENTION

The invention relates to a method and plant for the recovery of lithium carbonate from contaminated lithium bromide. The lithium bromide, being contaminated with metals and/or organic compounds and the carbonate preferably being sodium carbonate. Preferably, the lithium carbonate is recovered using sodium carbonate

### BACKGROUND OF INVENTION

Lithium bromide (LiBr) is used in large quantities in several applications such as heating pumps and cooling systems including refrigerators. One example is absorption heating pumps used to provide energy to households. In Sweden there a total waste of approximately 73 million tons of LiBr and 62 million tons are waste from the industry. The reasons why lithium bromide solutions are discarded depends on several factors such as the concentration of antifoam agents and/or anticorrosive agents are to high or to low in the lithium bromide solution when the solution is delivered from the manufacture. Furthermore, often contaminants arise during the use of the lithium bromide solution in a plant, a plant in which the lithium bromide, circulate in a closed systems. The total result is that the lithium bromide solution contain large amounts of contaminants, such as metals, organic compounds such as toxic compounds, or other organic or unorganic substances, such as chlorine, iron, chromium, sulphur, copper, antifoam, tensides, anticorrosive agents etc.

Today, it is not possible to deposit discarded lithium bromide solutions in Sweden due to the presence of environmental hazardous substances in the discarded lithium bromide such as the environmental hazard bromide. The large amounts of discarded lithium carbonate are therefor deposited in large containers within the industry. During the storage of the discarded lithium bromides, in solution or in a dried form, leach water may arise. Leach water containing the above mentioned environmental hazardous substances. The leach water may find the way out into the ground water and the ground resulting in that the environmental hazardous substances end up in the ground water and in the ground and is exposed to microorganisms and fishes. These environmental hazardous substances are often toxic for both microorganisms and fishes, which are one of the reasons why they are not allowed to be deposited directly in our environment. One example of a toxic substance is bromide, which is present in large quantities in lithium bromide solutions.

Sometimes the storage of discarded lithium bromide solutions result in that the container used for the storage break and the discarded lithium bromide solution leach out and reach the ground water and the ground as above. The storage of these large quantities of discarded lithium bromide also occupies large areas within the industry, areas, which could be used for other more economic purposes.

There is an increased demand from both nature and different groups of people that we should try to reuse as much as possible to reduce the still increasing mountain of different kinds of waste and also try to minimise the reduction of our limiting nature resources. Today there is no method available for the recovery of discarded contaminated lithium bromide solutions.

A method for the recovery of contaminated discarded lithium bromide would reduce the amount of discarded contaminated lithium bromide and furthermore reduce the pressure of toxic bromides on the environment.

### BRIEF DISCLOSURE OF THE INVENTION

The object of the present invention is to provide an economic method and a plant for the recovery of lithium carbonate from contaminated lithium bromide, such as discarded lithium bromide. By the availability of such a method the recovered lithium carbonate may economically be reused in several industries, such as the lithium battery industry, the concrete industry, by ceramics and in the production of clinkers and tiles.

Preferably, the recovery of lithium carbonate utilises sodium carbonate for the recovery of lithium carbonate from lithium bromide. Hereby both lithium carbonate and sodium bromide are recovered as final products. The recovered sodium bromide may be reused in the pulp industry or other industries where there is a need of an antibacterial- and/or antimould-agent.

In a first embodiment, the invention relates to a method for recovery of lithium carbonate recovery from a metal contaminated lithium bromide comprising the steps of; providing a solution of the metal contaminated lithium bromide; heating the metal contaminated lithium bromide to a temperature of from about 25 to about 45° C; maintaining the temperature throughout the method, adding sodium carbonate in solid form to the heated metal contaminated lithium bromide solution and precipitating solid lithium carbonate.

In a second aspect, the invention relates to a method of lithium carbonate recovery from an organic compound contaminated lithium bromide comprising the steps of; creating a solution of the organic compound contaminated lithium bromide; adding saturated sodium carbonate preheated to a temperature of 25 -45° C to the organic compound contaminated lithium bromide solution and precipitation of solid lithium carbonate.

Accordingly, the invention relates to a plant in which the methods are used and the use of the recovered lithium carbonate.

The invention provides completely new economic method for the recovery of lithium carbonate from discarded contaminated lithium bromide, which reduces the problems of poisoning the ground water and the ground with bromides which are toxic for microorganisms and fishes, reduced the waste with our nature resources and furthermore provide the market with economically interesting lithium carbonate.

### DETAILED DESCRIPTION OF THE INVENTION

The invention relates to a method and plant for the recovery of lithium carbonate from contaminated lithium bromide. The lithium bromide may be discarded lithium bromide which may be discarded from heating pumps, ventilation systems, absorption heating pumps, refrigerators or any other sources from which the lithium bromide is supposed to be discarded.

The lithium bromide may be contaminated by metals and/or organic compounds. Metals such as Cu²⁺, Cr³⁺, Cr⁶⁺, Fe²⁺ and/or organic compounds such as tensides, anticorrosive agents and antifoaming agents. Tensides, anticorrosive agents and antifoaming agents well-known to a person skilled in the art.

Depending on if lithium bromide is contaminated with metals or organic substances, slightly different methods are necessary to use to enable a successful recovery of lithium carbonate.

### Recovery of lithium carbonate from lithium bromide contaminated with metals.

We have surprisingly found that by the use of a preheated lithium bromide solution during our recovery method it is possible to obtain a lithium carbonate being substantially free from the contaminating metals.

The metal contaminated lithium bromides are discarded lithium bromides such as lithium bromides that have been used in heating pumps and cooling plants including refrigerators. These metal contaminated lithium bromides may be contaminated with one or more metals such as Cu²⁺, Cr³⁺, Cr⁶⁺, Fe²⁺, preferably Cr³⁺ and Cr⁶⁺. The metals may bind more or less strongly to lithium and thereby render it more difficult to recover lithium in the form of lithium carbonate.

The method according to the present invention makes use of several steps through out the method, which makes the recovery of lithium in the form of lithium carbonate possible. Firstly the metal contaminated lithium bromides are provided in the form of a solution. The metal contaminated lithium bromide solution is heated to a temperature of from about 25 to about 45° C, such as from about 30° C to about 45° C or from about 35° C to about 40° C to enable a successful separation of the contaminating metals from lithium.

The temperature to be chosen depends among others, the concentration on the metal contaminated lithium bromide solution and/or the concentration of the contaminating metals.

For example a metal contaminated lithium bromide solution having a concentration of ≤ 10 % may preferably be heated to a temperature above 35° C and a metal contaminated lithium bromide solution having a concentration of ≥ 25% may preferably be heated to a temperature above 25° C. A metal contaminated lithium bromide solution having a concentration of from about 10% to about 25% may be heated to a temperature of at least 25° C.

However, the temperature is also dependent on the concentration of the contaminating metals such as a contamination of about 49 µg/l of one or more metals, the metal contaminated lithium bromide solution may be heated to a temperature from about 30 °C to about 35° C and a contamination of 50 µg/l of one or more metals, the metal contaminated lithium bromide solution may be heated to a temperature from about 35 ° C to about 45° C.

After the metal contaminated lithium bromide solution has been heated, the solution is maintained at that temperature throughout the method to secure the contaminating metals remains in solution.

Carbonate is the added in a solid form to the heated metal contaminated lithium bromide solution, preferably the carbonate is sodium carbonate. The carbonate may be added in an amount of from about 0.1 to about 31 g/l of metal contaminated lithiumbromide solution. Preferably the added carbonate is a carbonate solution such as sodium carbonate and added in a concentration of 50 % (weight/volume). The carbonate is preferably added under stirring of the lithium bromide solution. Carbonate is added continuously and lithium carbonate start to precipitate in the form of solid lithium carbonate. However, the metals remain in the solution due to the increased temperature of the metal contaminated lithium bromide solution and thereby the metals are separated from lithium and enables the possibility to obtain lithium carbonate which is substantially free from metals.

When sodium carbonate is used as carbonate source, a metal containing sodium bromide solution is obtained together with the solid lithium carbonate. The metal containing sodium bromide solution may be further purified using methods well-known for a person skilled in the art, such as ion exchangers selective for certain metal ions to obtain purer forms of sodium bromide.

The precipitated lithium carbonate is at least 90 % pure lithium carbonate, such as from about 90 % to 100 % pure lithium carbonate, or from about 95 % to 100 % pure lithium carbonate or from about 98 % to 100 % pure lithium carbonate or 99.1 %, 99.2 %, 99.3 %, 99.4 %, 99.5 %, 99.6 %, 99.7 %, 99. 8 % or 99.9 % pure lithium carbonate.

The precipitated lithium carbonate may further be dried at a temperature of < 600 °C, such as from about 100 °C to about 600 °C, preferably > 100 °C.

The metals including the toxic bromide remain in the solution and may be recovered therefrom by other methods.

The recovered lithium carbonate may be used in several industries such as the production of lithium batteries, the concrete industry, by ceramics and in the production of clinkers and tiles.

When sodium carbonate is used for the recovery of lithium carbonate, the sodium bromide solution may be reused in the pulp industry or other industries where there is a need of an antibacterial- and/or antimould-agent.

The method for recovery of lithium carbonate from a metal contaminated lithium bromide may be used alone or in combination with the method mentioned below in the case a discarded lithium bromide being contaminated with both one or more metals and one or more organic compounds. When both of the methods are needed, the order in which the two methods are combined are of no importance and may vary.

### Recovery of lithium carbonate from lithium bromide contaminated with organic compounds.

We have surprisingly found that by the use of a preheated saturated carbonate, such as sodium carbonate during recovery of lithium carbonate from an organic compound contaminated lithium bromide solution it is possible to obtain a lithium carbonate being substantially free from the contaminating organic compounds.

The organic compound contaminated lithium bromides may be discarded lithium bromides such as lithium bromides that have been used in heating pumps and cooling plants including refrigerators to replace freon. These organic contaminated lithium bromides may be contaminated with one or more organic compounds such as tensides, anticorrosive agents and antifoaming agents.

The method according to the present invention makes use of several steps through out the method, which makes the recovery of lithium in the form of lithium carbonate possible. Firstly the organic contaminated lithium bromides are provided in the form of a solution obtained either directly from the contaminated lithium bromide or after the contaminated lithium bromide has been separated from contaminating metals using the method described above.

Then carbonate is added in a saturated preheated from, preheated to a temperature of from about 25 -45° C, such as from about 35° C to about 45° C. Preferably the carbonate is sodium carbonate such as in example 2. The carbonate is added under stirring of the organic compound contaminated lithium bromide solution. Carbonate is added continuously and lithium carbonate start to precipitate in the form of solid lithium carbonate. However, the organic compounds remain in the solution and thereby the organic compounds are separated from lithium.

The precipitated lithium carbonate is at least 90 % pure lithium carbonate, such as from about 90 % to 100 % pure lithium carbonate, or from about 95 % to 100 % pure lithium carbonate or from about 98 % to 100 % pure lithium carbonate or 99.1 %, 99.2 %, 99.3 %, 99.4 %, 99.5 %, 99.6 %, 99.7 %, 99. 8 % or 99.9 % pure lithium carbonate.

The precipitated lithium carbonate may further be dried at a temperature of < 600 ° C, such as from about 100 ° C to about 600° C, preferably > 100 °C.

The recovered lithium carbonate may be used in several industries such as the production of lithium batteries, the concrete industry, by ceramics and in the production of clinkers and tiles.

Furthermore the invention relates to a plant using one or both of the above mentioned methods. The plant may preferably be a closed system

Additionally the invention relates to use of lithium carbonate which has been recovered, from discarded contaminated lithium bromide by the methods according to the invention. The lithium bromide, being contaminated with one or more metals and/or organic compounds. The invention also relates to use of sodium bromide when sodium carbonate is used for the recovery of lithium carbonate.

### EXAMPLES

### EXAMPLE 1

100 litre 10 % (weight/volume) of LiBr-solution contaminated with 49 µg/l of Cr²⁺ was preheated to a temperature of 40 ° C. 6.1 kg of solid sodium carbonate was added under stirring of the LiBr-solution. The temperature was kept constant. 4.25 kg of lithium carbonate were precipitated in the form of a lithium carbonate cake and 100 litre of sodium bromide in solution. The sodium bromide solution also contained 49 µg/l of Cr²⁺ and was further treated using a selective ion exchangers. The lithium carbonate cake was found to be 99.6 % pure lithium carbonate.

### EXAMPLE 2

100 litre 50 % (weight/volume) of LiBr-solution contaminated with 50 µg/l of antifoam agent held at a temperature of 25° C. Saturated sodium carbonate was added to the LiBr-solution under stirring of the LiBr-solution. The mixture was heated to a temperature of 30° C and 421.25 kg of lithium carbonate were precipitated in the form of a lithium carbonate cake and 100 litre of sodium bromide in solution containing the antifoam agent. The lithium carbonate cake was found to be 99.6 % pure lithium carbonate.

Preparation of saturated sodium carbonate:
30.5 kg of solid sodium carbonate was mixed with 60.4 litre of water prior addition to the lithium bromide solution.

## Claims

1. A method for recovery of lithium carbonate from a metal contaminated lithium bromide comprising the steps of
a) providing a solution of the metal contaminated lithium bromide,
b) heating the metal contaminated lithium bromide to a temperature of from about 25 to about 45° C,
c) maintaining the temperature throughout the method,
d) adding carbonate in solid form to the heated metal contaminated lithium bromide solution and
e) precipitating solid lithium carbonate.

2. Method according to claim 1, wherein the lithium bromide is contaminated with a metal selected from the group consisting of Cu²⁺, Cr³⁺, Cr⁶⁺, Fe²⁺ and Fe³⁺.

3. Method according to claim 2, wherein the metal is selected from the group consisting of Cr³⁺ and Cr⁶⁺.

4. Method according to any of the preceding claims, wherein the temperature is from about 30° C to about 45° C.

5. The method according to claim 4, wherein the temperature is from about 35° C to about 40° C.

6. The method according to any of the preceding claims, wherein the carbonate used in step d) is sodium carbonate and lithium carbonate is precipitated and sodium bromide obtained as a solution in step e).

7. A method of lithium carbonate recovery from an organic compound contaminated lithium bromide comprising the steps of
a) creating a solution of the organic compound contaminated lithium bromide,
b) adding saturated carbonate preheated to a temperature of 25 -45° C to the organic compound contaminated lithium bromide solution and
c) precipitation of solid lithium carbonate

8. Method according to claim 7, wherein the lithium bromide is contaminated with an organic compound selected from the group consisting of tensides, anticorrosive agents and antifoaming agents.

9. Method according to any of the claims 7-8, wherein the temperature is from about 35° C to about 45° C.

10. The method according to any of the claims 7-9, wherein the carbonate used in step b) is sodium carbonate and lithium carbonate is precipitated and sodium bromide obtained as a solution in step c).

11. The method according to any of the preceding claims, wherein the precipitated solid lithium carbonate is at least 90 % pure lithium carbonate.

12. The method according to any of the preceding claims, wherein the precipitated solid lithium carbonate is from about 90 % to 100 % pure lithium carbonate.

13. The method according to claim 9, wherein the precipitated solid lithium carbonate is from about 95 % to 100 % pure lithium carbonate.

14. The method according to claims 9-10, wherein the precipitated solid lithium carbonate is from about 98 % to 100 % pure lithium carbonate.

15. A method for the recovery of lithium carbonate from a contaminated lithium bromide, wherein the method according to any of the claims 1-6 is combined with any of the claims 7-14.

## Patentansprüche

1. Verfahren zur Rückgewinnung von Lithiumcarbonat aus metallverunreinigtem Lithiumbromid, bei dem man:
a) eine Lösung des metallverunreinigten Lithiumbromids bereitstellt,
b) das metallverunreinigte Lithiumbromid auf eine Temperatur von etwa 25 bis etwa 45°C erwärmt,
c) die Temperatur über das gesamte Verfahren hinweg aufrechterhält,
d) die erwärmte Lösung von metallverunreinigtem Lithiumbromid mit Carbonat in fester Form versetzt und
e) festes Lithiumcarbonat ausfällt.

2. Verfahren nach Anspruch 1, bei dem das Lithiumbromid mit einem Metall aus der Gruppe bestehend aus Cu²⁺, Cr³⁺, Cr^{b+}, Fe²⁺ und Fe³⁺ verunreinigt ist.

3. Verfahren nach Anspruch 2, bei dem das Metall aus der Gruppe bestehend aus Cr³⁺ und Cr⁶⁺ stammt.

4. Verfahren nach einem der vorhergehenden Ansprüche, bei dem die Temperatur etwa 30°C bis etwa 45°C beträgt.

5. Verfahren nach Anspruch 4, bei dem die Temperatur etwa 35°C bis etwa 40°C beträgt.

6. Verfahren nach einem der vorhergehenden Ansprüche, bei dem man als Carbonat in Schritt d) Natriumcarbonat verwendet, Lithiumcarbonat ausfällt und als Lösung in Schritt e) Natriumbromid erhält.

7. Verfahren zur Rückgewinnung von Lithiumcarbonat aus mit einer organischen Verbindung verunreinigtem Lithiumbromid, bei dem man
a) eine Lösung des mit einer organischen Verbindung verunreinigten Lithiumbromids herstellt,
b) die Lösung von mit einer organischen Verbindung verunreinigtem Lithiumbromid mit auf eine Temperatur von 25-45°C vorgewärmtem gesättigtem Carbonat versetzt und
c) festes Lithiumcarbonat ausfällt.

8. Verfahren nach Anspruch 7, bei dem das Lithiumbromid mit einer organischen Verbindung aus der Gruppe bestehend aus Tensiden, Korrosionsschutzmitteln und Antischaummitteln verunreinigt ist.

9. Verfahren nach einem der Ansprüche 7-8, bei dem die Temperatur etwa 35°C bis etwa 45°C beträgt.

10. Verfahren nach einem der Ansprüche 7-9, bei dem man als Carbonat in Schritt b) Natriumcarbonat verwendet, Lithiumcarbonat ausfällt und als Lösung in Schritt c) Natriumbromid erhält.

11. Verfahren nach einem der vorhergehenden Ansprüche, bei dem das ausgefällte feste Lithiumcarbonat eine Reinheit von mindestens 90% aufweist.

12. Verfahren nach einem der vorhergehenden Ansprüche, bei dem das ausgefällte feste Lithiumcarbonat eine Reinheit von etwa 90 bis 100% aufweist.

13. Verfahren nach Anspruch 9, bei dem das ausgefällte feste Lithiumcarbonat eine Reinheit von etwa 95 bis 100% aufweist.

14. Verfahren nach einem der Ansprüche 9-10, bei dem das ausgefällte feste Lithiumcarbonat eine Reinheit von etwa 98 bis 100% aufweist.

15. Verfahren zur Rückgewinnung von Lithiumcarbonat aus verunreinigtem Lithiumbromid, bei dem man das Verfahren nach einem der Ansprüche 1-6 mit einem der Ansprüche 7-14 kombiniert.

## Revendications

1. Procédé de récupération de carbonate de lithium à partir de bromure de lithium contaminé par un métal comprenant les étapes consistant à
a) fournir une solution du bromure de lithium contaminé par un métal,
b) chauffer le bromure de lithium contaminé par un métal à une température comprise dans la plage allant d'environ 25 à environ 45 °C,
c) maintenir la température tout au long du procédé,
d) ajouter le carbonate sous une forme solide à la solution chauffée de bromure de lithium contaminé par un métal, et
e) précipiter le carbonate de lithium solide.

2. Procédé selon la revendication 1, dans lequel le bromure de lithium est contaminé par un métal choisi dans le groupe comprenant Cu²⁺, Cr³⁺, Cr⁶⁺, Fe²⁺ et Fe³⁺.

3. Procédé selon la revendication 2, dans lequel le métal est choisi dans le groupe comprenant Cr³⁺ et Cr⁶⁺.

4. Procédé selon l'une quelconque des revendications précédentes, dans lequel la température est comprise dans la plage allant d'environ 30 °C à environ 45 °C.

5. Procédé selon la revendication 4, dans lequel la température est comprise dans la plage allant d'environ 35 °C à environ 40 °C.

6. Procédé selon l'une quelconque des revendications précédentes, dans lequel le carbonate utilisé dans l'étape d) est le carbonate de sodium et le carbonate de lithium est précipité et le bromure de sodium obtenu sous la forme d'une solution dans l'étape e).

7. Procédé de récupération de carbonate de lithium à partir de bromure de lithium contaminé par un composé organique comprenant les étapes consistant à
a) créer une solution du bromure de lithium contaminé par un composé organique,
b) ajouter le carbonate saturé préchauffé à une température comprise dans la plage allant de 25 à 45 °C à la solution de bromure de lithium contaminé par un composé organique, et
c) précipiter le carbonate de lithium solide.

8. Procédé selon la revendication 7, dans lequel le bromure de lithium est contaminé par un composé organique choisi dans le groupe comprenant des tensioactifs, des agents anticorrosifs et des agents antimousses.

9. Procédé selon l'une quelconque des revendications 7 et 8, dans lequel la température est comprise dans la plage allant d'environ 35 °C à environ 45 °C.

10. Procédé selon l'une quelconque des revendications 7 à 9, dans lequel le carbonate utilisé dans l'étape b) est le carbonate de sodium et le carbonate de lithium est précipité et le bromure de sodium obtenu sous la forme d'une solution dans l'étape c).

11. Procédé selon l'une quelconque des revendications précédentes, dans lequel le carbonate de lithium solide précipité est du carbonate de lithium pur à au moins 90%.

12. Procédé selon l'une quelconque des revendications précédentes, dans lequel le carbonate de lithium solide précipité est du carbonate de lithium 90 % à 100 % pur.

13. Procédé selon la revendication 9, dans lequel le carbonate de lithium solide précipité est du carbonate de lithium 95 % à 100 % pur.

14. Procédé selon l'une quelconque des revendications 9 et 10, dans lequel le carbonate de lithium solide précipité est du carbonate de lithium 98 % à 100 % pur.

15. Procédé de récupération de carbonate de lithium à partir de bromure de lithium contaminé, dans lequel le procédé selon l'une quelconque des revendications 1 à 6 est combiné au procédé selon l'une quelconque des revendications 7 à 14.
